# EUROPEAN PATENT APPLICATION

(11) **EP 2 455 309 A1**
(43) Date of publication of application: **23.05.2012**
(21) Application number: 11189075.2
(22) Date of filing: 15.11.2011
(51) Int. Cl.: B65G 15/34, D03D 11/00, D21F 1/00

(54) **Dual layer twill fabric for conveyor belt applications**

(30) Priority: 18.11.2010 US 414944 P
(71) Applicant: Veyance Technologies, Inc., Fairlawn, OH 44333-3023 (US)
(72) Inventor: Billups, wesley James, KS 66615 TOPEKA (US)
(74) Representative: Dreiss

(57) **Abstract**

A composite fabric for use in a conveyor belt has a first weft sheet of individual weft yarns (W1-W3), a second weft sheet of individual weft yarns (W4-W6), a top warp yarn (1), a bottom warp yarn (2), and a binder yarn (B). The first and second weft sheet yarns have an outer side and an opposing inner side, wherein their inner sides are adjacent to each other. The top warp yarn (1) extends at least in part between the first and second weft sheet, and at least in part is woven around at least one first weft sheet yarn (W3) outer side. The bottom warp yarn (2) extends at least in part between the first and said second weft sheet, and at least in part is woven around at least one second weft sheet yarn (W4) outer side. The top warp yarn (1) does not weave around any second weft sheet yarns (W4-W6), and the bottom warp yarn (2) does not weave around any first weft sheet yarns (W1-W2). The binder yarn (B) weaves alternately around a first weft sheet yarn (W1-W3) outer side, and a second weft sheet yarn (W4-W6) outer side.

## Description

### CROSS REFERENCE TO RELATED APPLICATIONS

This application claims the benefit of U.S. Provisional Application No. 61/414,944, filed 11/18/2010.

### BACKGROUND

The disclosed invention is directed toward an improved construction for a reinforcing fabric for belts.

Recent developments in high tension abuse resistant conveyor belt fabrics have created fabrics which are too thick and rigid to be used in multi-layer constructions. They either have too little crimp in the warp to allow multi-ply construction or are so thick the distance between two plies creates longitudinal flexibility and troughing issues. This invention takes the positives of the high tension fabrics and combines them with the benefits from using lighter weight conveyor belt fabrics.

Most high tension/abuse resistant fabrics being produced today use a straight warp tension member. This straight warp yarn has 0-1% crimp which limits the ultimate elongation of the finished belt, but also makes it very rigid if produced in multi-ply constructions.

High volume conveyor belt fabrics are produced using a plain, crowfoot, or twill pattern. These weave patterns can produce fabrics with 3-10% crimp. They excel in multi-ply conveyor belts but create too much stretch and poorer abuse resistance than their straight warp counterparts.

This invention takes a crowfoot or twill pattern and improves its stretch and abuse characteristics by creating 2 layers. The two layers induce a moderate amount of crimp, 2-5%, which allow the fabric to be used in 2, 3, or 4 ply applications. They also improve the abuse resistance over standard weave patterns in that the warp yarns are protected by the weft yarns. The exposure of the warp yarns is kept to a minimum by the unique weave pattern.

### SUMMARY

In accordance with the present invention, a reinforcing fabric for a belting is disclosed. The reinforcing fabric is a composite fabric which provides the belt with superior properties such as high rip resistance, transverse tear resistance, impact resistance, anti-fraying, and flexibility. In accordance with the present invention, the composite has two layers, the weft yarns have a corresponding binder, and there is a top warp yarn which covers some of the top weft yarns, and a bottom warp yarn which covers some of the bottom weft yarns.

### BRIEF DESCRIPTION OF DRAWINGS

FIG. 1 is a perspective view of a belting employing the inventive fabric in one of the plies;
FIG. 2 is a schematic illustration of one embodiment of the inventive fabric;
FIG. 3 is a pattern for a first embodiment of the inventive fabric;
FIG. 4 is a schematic illustration of a second embodiment of the inventive fabric;
FIG. 5 is a pattern for a second embodiment of the inventive fabric;

### DETAILED DESCRIPTION

### Definitions

"Binder Yarn" denotes yarn that is used to bind together different yarns in a fabric.

"Fabric" denotes a network of essentially unidirectionally extending cords/yarns, which may be twisted, and which may in turn be composed of a plurality of a multiplicity of filaments (which may also be twisted).

"Crimp Percentage" is defined as the mean difference between the straightened yarn length and the distance between the ends of the yarn while in cloth, expressed as a percentage.

"Warp" refers to a network of essentially unidirectional extending cords/yarns, which extend in the longitudinal direction of the belt.

"Weft" (filling) refers to the cord/yarn placed at right angles to the warp cords/yarns.

"Woven Fabric" refers to the interlacing of two sets of yarn, the warp and weft yarns, at right angles.

"Plain Weave" refers to a type of weave wherein each warp yarn interlaces one yarn at a time with each weft yarn and vise versa. Plain weave fabric has the same appearance on both sides of the fabric.

"Twill Weave" refers to a type of weave wherein there are fewer interlacings between the warp and weft yarns than plain weave fabrics. Twill weaves are characterized by diagonal lines on the fabric.

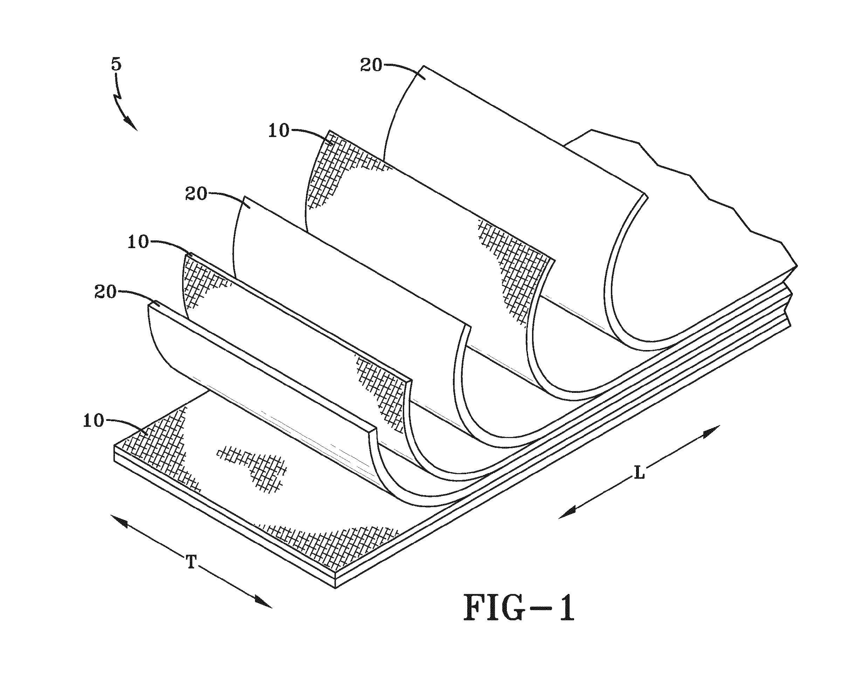

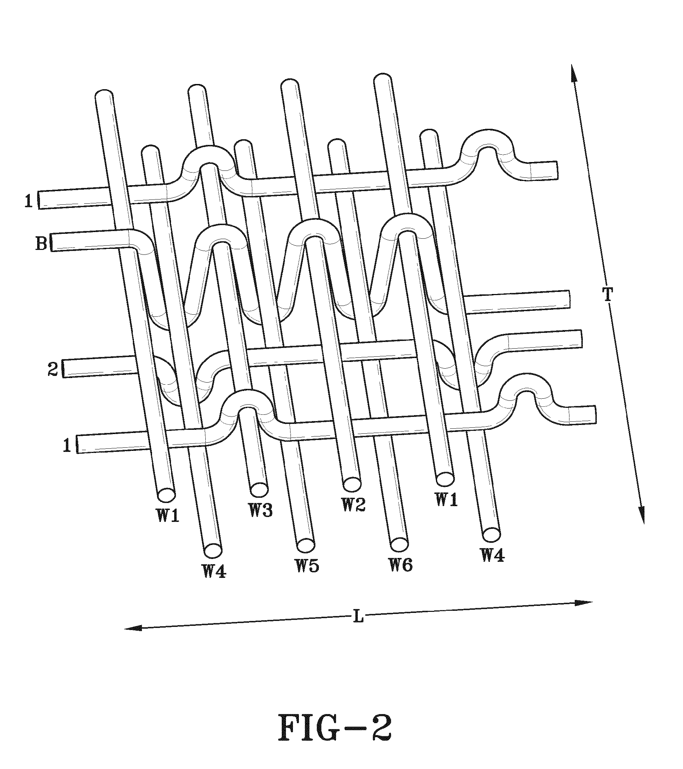

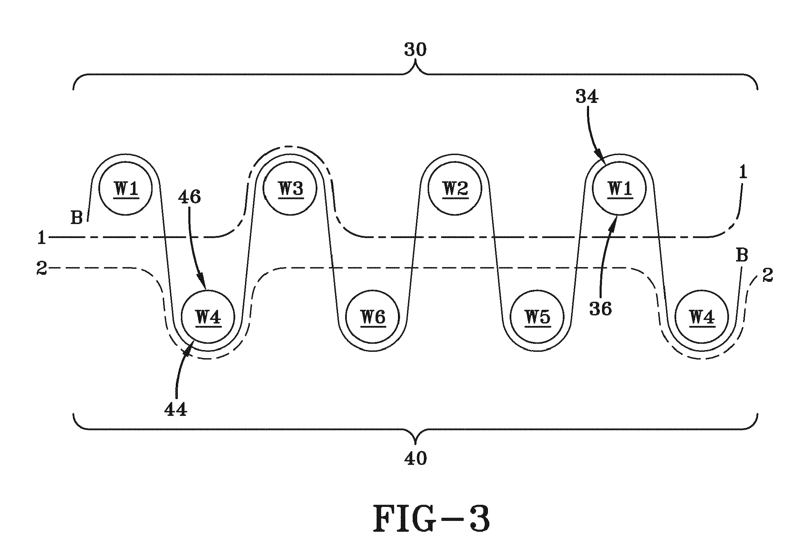

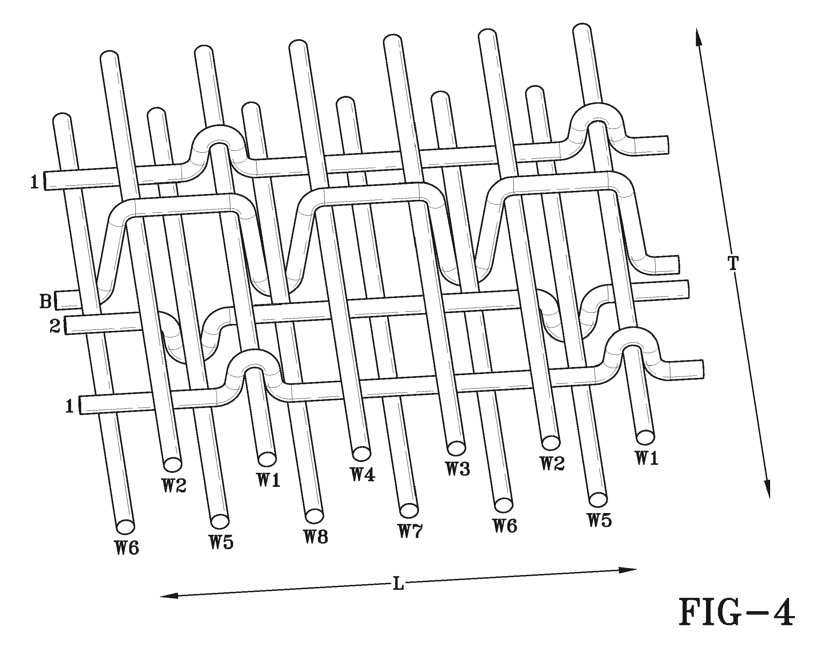

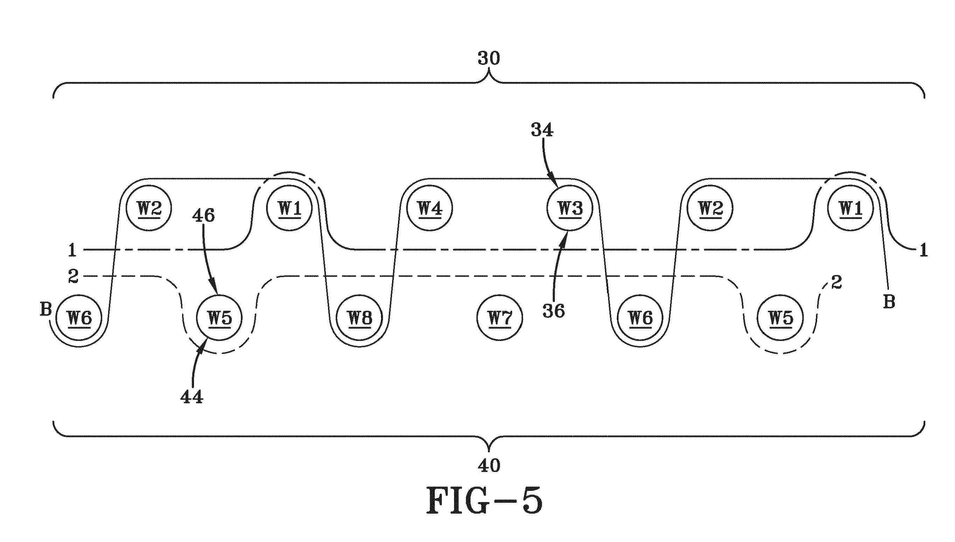

Various aspects of the invention are presented in Figures 1-5 which are not drawn to scale and in which like components are numbered alike. FIG. 1 illustrates a multi-ply belting **5** employing the inventive fabric **10**. The length of the belting **5** extends in the longitudinal direction L of the belt, while the width of the belting **5** extends in the transverse direction T of the belt. The relative thickness of the layers is for illustrative purposes only. In each fabric ply, the warp yarns extend in the longitudinal direction L of the belt, while the weft yarns extend in the transverse direction T.

According to an aspect of the invention, a composite fabric **10** for use in a conveyor belt **5** comprises a first weft sheet **30**, a second weft sheet **40**, a top warp yarn **1**, a bottom warp yarn **2**, and a binder yarn **B**.

The first weft sheet **30** is comprised of individual weft yarns **W1-W3,** wherein each yarn has an outer side **34** and an opposing inner side **36**.

The second weft sheet **40** is also comprised of individual weft yarns **W4-W6**, wherein each yarn has an outer side 44 and an opposing inner side **46**. The second weft sheet yarn inner side **46** is adjacent to the first weft sheet yarns inner side **36**.

According to an aspect of the invention, a top warp yarn **1** extends at least in part between the first and the second weft sheet **30/40**, and is at least in part woven around at least one first weft sheet yarn outer side **34**.

According to an aspect of the invention a bottom warp yarn 2 extends at least in part between the first and the second weft sheet **30/40,** and is at least in part woven around at least one second weft sheet yarn outer side **44**.

The top warp yarn **1** does not weave around any second weft sheet yarns **40**, and the bottom warp yarn **2** does not weave around any first weft sheet yarns **30**.

The binder yarn **B** weaves alternately around a first weft sheet yarn outer side **34** and a second weft sheet yarn outer side **44**.

According to a further aspect of the invention, the top warp yarn **1** extends around a single first weft sheet yarn outer side **34**, and subsequently around two first weft sheet yarns inner sides **36**, and repeats this weave pattern.

According to another aspect of the invention, the bottom warp yarn **2** extends around a single second weft sheet yarn outer side **44**, and subsequently around two second weft sheet yarns inner sides **46**, and repeats this weave pattern.

In a further embodiment, the top warp yarn **1** extends around a single first weft sheet yarn outer side **34**, and subsequently around two first weft sheet yarns inner sides **36**, and repeats this weave pattern, and the bottom warp yarn **2** extends around a single second weft sheet yarn outer side **44**, and subsequently around two second weft sheet yarns inner sides **46**, and repeats this weave pattern.

According to another aspect of the invention, a first weft sheet yarn having a top warp around its outer side (see **W3**) is adjacent to a second weft sheet yarn having a bottom warp around its outer side (see **W4**).

In a preferred embodiment, the top warp yarn **1** and the bottom warp yarn **2** weave through the first weft sheet 30 and the second weft sheet **40** respectively such that the resulting crimp is between 2% - 5%.

This inventive composite fabric ply may be used in construction of a conveyor belt **5**. The inventive fabric may be employed as the sole reinforcing structure in a belt or combined with other layers for multiple ply beltings. A conveyor belt **5** using this fabric may use just one ply of this composite fabric **10**, or multiple plies. If multiple plies of this composite fabric **10** are used, they may be separated by plies of rubber **20**, or other elastomeric material. In a further embodiment of the invention, the top and bottom layers of a conveyor belt are rubber plies **20** and composite fabric plies **10** are alternated throughout the construction. The number of plies and the combinations employed are dependent upon the desired application for the belting.

In another embodiment of the invention, the binder yarn **B** weaves at least around a first weft sheet yarn outer side **34**, and a second weft sheet yarn outer side **44**.

In a further aspect of this embodiment, the top warp yarn **1** extends around a single first weft sheet yarn outer side **34**, and subsequently around three first weft sheet yarns inner sides **36**, and repeats this weave pattern.

In a further aspect of this embodiment the bottom warp yarn **2** extends around a single second weft sheet yarn outer side **44**, and subsequently around three second weft sheet yarns inner sides **46**, and repeats this weave pattern.

According to another aspect of this embodiment, the first weft sheet yarn **W1** having the top warp **1** around the first weft sheet yarn outer side **34** is adjacent to the second weft sheet yarn W5 having the bottom warp 2 around the second weft sheet yarn outer side **44**.

In a further embodiment of this invention, the binder yarn **B** weaves around two adjacent first weft sheet yarn outer sides **34**, and then a second weft sheet yarn outer side **44**, and repeats this pattern.

## Claims

1. A composite fabric for use in a conveyor belt, comprising:
A first weft sheet of individual weft yarns, wherein said first weft sheet yarns have an outer side and an opposing inner side;
A second weft sheet of individual weft yarns, wherein said second weft sheet yarns have an outer side and an opposing inner side, wherein said inner side is adjacent to said first weft sheet yarns inner side;
At least one pair of warp yarns comprising a top warp yarn, and a bottom warp yarn,
wherein said top warp yarn extends at least in part between said first and said second weft sheet, and at least in part is woven around at least one first weft sheet yarn outer side;
wherein said bottom warp yarn extends at least in part between said first and said second weft sheet, and at least in part is woven around at least one second weft sheet yarn outer side,
wherein said top warp yarn does not weave around any second weft sheet yarns, and wherein said bottom warp yarn does not weave around any first weft sheet yarns; and
a binder yarn wherein said binder yarn weaves alternately around a first weft sheet yarn outer side, and a second weft sheet yarn outer side.

2. The composite fabric of claim 1 wherein said top warp yarn extends around a single first weft sheet yarn outer side, and subsequently around two first weft sheet yarns inner sides, and repeats this weave pattern.

3. The composite fabric of claim 1 wherein said bottom warp yarn extends around a single second weft sheet yarn outer side, and subsequently around two second weft sheet yarns inner sides, and repeats this weave pattern.

4. The composite fabric of claim 2, wherein said bottom warp yarn extends around a single second weft sheet yarn outer side, and subsequently around two second weft sheet yarns inner sides, and repeats this weave pattern.

5. The composite fabric of claim 4 wherein a first weft sheet yarn having said top warp around said first weft sheet yarn outer side is adjacent to second weft sheet yarn having said bottom warp around said second weft sheet yarn outer side.

6. The composite fabric of claim 1 wherein said top warp yarn and said bottom warp yarn weave through said first weft sheet and said second weft sheet respectively such that the resulting crimp is between 2% - 5%.

7. A conveyor belt comprised of:
at least one composite fabric ply comprising;
a first weft sheet of individual weft yarns, wherein said first weft sheet yarns have an outer side and an opposing inner side;
a second weft sheet of individual weft yarns, wherein said second weft sheet yarns have an outer side and an opposing inner side, wherein said inner side is adjacent to said first weft sheet yarns inner side;
at least one pair of warp yarns comprising a top warp yarn, and a bottom warp yarn,
wherein said top warp yarn extends at least in part between said first and said second weft sheet, and at least in part is woven around at least one first weft sheet yarn outer side;
wherein said bottom warp yarn extends at least in part between said first and said second weft sheet, and at least in part is woven around at least one second weft sheet yarn outer side,
wherein said top warp yarn does not weave around any second weft sheet yarns, and wherein said bottom warp yarn does not weave around any first weft sheet yarns; and
a binder yarn wherein said binder yarn weaves alternately around a first weft sheet yarn outer side, and a second weft sheet yarn outer side.

8. The conveyor belt of claim 7 further comprising at least two said composite fabric plies, up to four said composite fabric plies.

9. The conveyor belt of claim 8 further comprising rubber layers between any said composite fabric plies.

10. The conveyor belt of claim 9 further comprising rubber layers on top of any exposed said composite fabric plies.

11. A composite fabric for use in a conveyor belt, comprising:
A first weft sheet of individual weft yarns, wherein said first weft sheet yarns have an outer side and an opposing inner side;
A second weft sheet of individual weft yarns, wherein said second weft sheet yarns have an outer side and an opposing inner side, wherein said inner side is adjacent to said first weft sheet yarns inner side;
At least one pair of warp yarns comprising a top warp yarn, and a bottom warp yarn;
wherein said top warp yarn extends at least in part between said first and said second weft sheet, and at least in part is woven around at least one first weft sheet yarn outer side;
wherein said bottom warp yarn extends at least in part between said first and said second weft sheet, and at least in part is woven around at least one second weft sheet yarn outer side,
wherein said top warp yarn does not weave around any second weft sheet yarns, and wherein said bottom warp yarn does not weave around any first weft sheet yarns; and
a binder yarn wherein said binder yarn weaves at least around a first weft sheet yarn outer side, and a second weft sheet yarn outer side.

12. The composite fabric of claim 11 wherein said top warp yarn extends around a single first weft sheet yarn outer side, and subsequently around three first weft sheet yarns inner sides, and repeats this weave pattern.

13. The composite fabric of claim 11 wherein said bottom warp yarn extends around a single second weft sheet yarn outer side, and subsequently around three second weft sheet yarns inner sides, and repeats this weave pattern.

14. The composite fabric of claim 12, wherein said bottom warp yarn extends around a single second weft sheet yarn outer side, and subsequently around three second weft sheet yarns inner sides, and repeats this weave pattern.

15. The composite fabric of claim 14 wherein a first weft sheet yarn having said top warp around said first weft sheet yarn outer side is adjacent to second weft sheet yarn having said bottom warp around said second weft sheet yarn outer side.

16. The composite fabric of claim 11 wherein said top warp yarn and said bottom warp yarn weave through said first weft sheet and said second weft sheet respectively such that the resulting crimp is between 2% - 5%.

17. The composite fabric of claim 11 wherein said binder yarn weaves around two adjacent first weft sheet yarn outer side, and then a second weft sheet yarn outer side, and repeats this pattern.
